# EUROPÄISCHE PATENTSCHRIFT

(11) **EP 0 841 382 B1**
(45) Veröffentlichungstag und Bekanntmachung des Hinweises auf die Patenterteilung: **18.12.2002**
(21) Anmeldenummer: 97116677.2
(22) Anmeldetag: 25.09.1997
(51) Int. Cl.: C09D 167/00, C09D 175/06

(54) **Organosol-Polyesterlacke sowie ein Verfahren zu ihrer Herstellung**
Organosol polyester paints and process for their preparation
Peintures à base de polyester sous forme d'organosols et procédé pour leur préparation

(30) Priorität: 12.11.1996 DE 19646640
(43) Veröffentlichungstag der Anmeldung: 13.05.1998
(73) Patentinhaber: Degussa AG, 40474 Düsseldorf (DE)
(72) Erfinder: Kögler, Dietrich, 42389 Wuppertal (DE); Schmitthenner, Martin, Dr., 58300 Wetter 4 (DE)

(56) Entgegenhaltungen:
- EP-A- 0 257 144
- EP-A- 0 288 964
- EP-A- 0 466 310
- PATENT ABSTRACTS OF JAPAN vol. 009, no. 078 (C-274), 6.April 1985 & JP 59 210975 A (NIPPON GOSEI KAGAKU KOGYO KK), 29.November 1984,

## Beschreibung

Die Erfindung betrifft Organosol-Polyesterlacke sowie ein Verfahren zu ihrer Herstellung. Derartige Überzugsmittel sind zur Dickschichtlackierung metallischer Substrate geeignet.

### Stand der Technik

Zur Beschichtung metallischer Substrate auf industriellen Bandlackieranlagen kommen Beschichtungsstoffe auf Basis verschiedener Bindemittelsysteme zum Einsatz. Die wichtigsten Systeme sind auf Basis Polyester, Polyester-Polyurethan, PVC (Plastisole,Organosole) oder Polyvinylidenfluorid (PVDF) formuliert. Daneben kommen noch Systeme auf Basis siliconmodifizierter Polyester sowie auf Epoxid- oder Acrylharz-Basis zum Einsatz.

Die bei Raumtemperatur flüssig verarbeitbaren Beschichtungsstoffe werden auf den industriellen Lackieranlagen in der Regel mit Walzlackieranlagen auf Bänder (Stahl, verzinkter Stahl, Aluminium, u.a.) aufgetragen. Dieses Auftragsverfahren zeichnet sich durch verschiedene Vorteile aus. Es gestattet auf typischen Hochleistungsanlagen in der Coil-Coating-Industrie hohe Bandgeschwindigkeiten ( bis 200 m/min) und gewährleistet hohe Gleichmäßigkeit des Beschichtungs-Auftrags. Die Verfilmung und Aushärtung der flüssigen Beschichtungsstoffe auf Bändern erfolgt in Durchlufttrocknern. Die genannten Beschichtungsstoffe nach dem Stand der Technik lassen sich hierbei bisher nur mit Filmschichtstärken bis ca. 30 Mikrometer (µm) in einem Trockner-Durchlauf verarbeiten. Eine Ausnahme hiervon stellen Beschichtungen auf Basis PVC (Plastisole) dar, welche mit Schichtstärken im Bereich 80-200 µm und zugleich relativ hohen Bandgeschwindigkeiten zu Dickschichtlackierungen verarbeitet werden können.

Aus den vorbeschichteten Bändern erfolgt durch Zuschnitt und Umformen die Herstellung einer Vielzahl industrieller Erzeugnisse, z.B. für die Bauindustrie, im Gerätebau, im Verkehrswesen oder für die Blechverpackungsindustrie (Can Coating). Dickschichtlackierungen sind dann von besonderem Interesse, wenn das aus vorbeschichtetem Metall hergestellte Erzeugnis hohe Beständigkeit gegen Korrosionsangriff aufweisen muß, z.B. in der Außen-Architektur oder in der Innen-Architektur oder beim Betrieb von Geräten im Feuchtklima. Dickschichtlackierungen auf Basis von PVC-Plastisolen zeichnen sich durch hervorragenden Korrosionsschutz, sehr gute Umformbarkeit, problemlose Farbtonauswahl und Verarbeitbarkeit auf den Beschichtungsanlagen aus. Andererseits weisen derartige Überzugsmittel auf PVC-Basis einige Nachteile auf. Aufgrund sehr schlechter Haftungseigenschaften auf metallischen Substraten können PVC-Plastisole nur zweischichtig auf speziellen Haftgrundierungen (Spezialprimer für PVC-Plastisole) verarbeitet werden. Die in typischen PVC-Plastisolen enthaltenen Weichmacher sind starke Quellungsmittel, so daß die Primer-Auswahl auf spezielle Systeme eingeengt ist.

Ein entscheidender Nachteil von PVC-Dickschichtlackierungen ist jedoch, daß die Entsorgung von PVC-beschichteten Blechen zunehmend problematisch und kostenintensiv wird.

Dies trifft auch für das Verfahren zu, metallische Substrate auf Bandbeschichtungsanlagen durch Aufkaschieren von PVC-Folien (40-400 µm Schichtdicke) zu beschichten. Zwar stehen Folien auf halogenfreier Polymer-Basis (Polyolefine,Polyacrylat u a.) zur Verfügung, jedoch sind bestimmte Nachteile bekannt. So sind spezielle Kaschierkleber erforderlich. Faltenbildung mit dünneren Folien, elektrostatische Staubanziehung, Glanzgrad-Schwankungen und Verlust der Folienprägung sind bekannte Probleme des Folienkaschier-Verfahrens.

Bekannt ist auch das Verfahren der Heißschmelz-Beschichtung von Metallbändern mit thermoplastischen Polymeren. Nachteilig bei diesem Verfahren ist der hohe maschinelle Aufwand für das Extrusionsbeschichten

Die DE 40 12 020 beschreibt die Dickschichtlackierung von Bändern mit Pulverlacken, z. B. auf Polyester-Basis. Nachteilig ist bei diesem Verfahren die geringe Bandgeschwindigkeit, limitiert durch das elektrostatische Auftragsverfahren der Pulverlacke.

Die EP 0 466 310 beschreibt die Verwendung von kristallinen, in Lösemitteln unlöslichen Polymeren in Dispersionen mit Teilchengrößen vorzugsweise im Bereich 1 - 10 µm als filmbildende Bestandteile für Beschichtungen. Für die Stabilität solcher Dispersionslacke werden spezielle Stabilisatoren als unverzichtbar beschrieben. Gemäß den Ausführungen dieser Patentschrift ist es nicht möglich, durch physikalische Vermahlung hergestellte Feinpulver von kristallinen, thermoplastischen Polymeren zur Herstellung von Dispersionslacken einzusetzen. Dies wird damit begründet, daß bei diesem Verfahren Lacke mit äußerst inhomogener Struktur und dementsprechend schlechten Lackfilmeigenschaften resultieren.

### Aufgabe der Erfindung

Die der Erfindung zugrundeliegende Aufgabe besteht darin, halogenfreie hitzehärtende Beschichtungsmittel für das Bandlackierverfahren zu entwickeln, welche als bei Raumtemperatur flüssiges System z.B. im Walzauftragsverfahren aufgetragen werden können und sich mit möglichst hohen Bandgeschwindigkeiten zu Dickschichtlackierungen mit guter mechanischer Verformbarkeit und sehr gutem Korrosionsschutz verarbeiten lassen.

### Lösung der Aufgabe

Diese Aufgabe wird erfindungsgemäß mit hitzehärtenden Beschichtungsmitteln gelöst, welche aus Lösungen von linearen und/oder schwach verzweigten amorphen Polyesterharzen sowie Vernetzerharzen in organischen Lösemitteln einerseits und in der Lösung suspendierten feinteiligen kristallinen Copolyestern andererseits bestehen.

Gegenstand der vorliegenden Erfindung sind Organosol-Polyesterlacke für Dickschichtlackierungen, im wesentlichen enthaltend
A) 10 bis 30 Massen % mindestens eines gelösten, linearen und/ oder schwach verzweigten amorphen Polyesters,
B) 0,5 bis 15 Massen % mindestens eines blockierten Polyisocyanatharzes und/oder
C) 0,5 bis 15 Massen % mindestens eines Triazinharzes,
D) 10 bis 40 Massen % Feinpulver von kleiner 150 µm Korngröße mindestens eines hochmolekularen kristallinen Copolyesters in Suspension, mit Molmasse von 10000 bis 50000 g/mol und geringer Quellbarkeit in Lösemitteln,
E) 0 bis 20 Massen % Pigmente und anorganische Füllstoffe,
F) 0 bis 1 Massen % mindestens eines Katalysators,
G) 0 bis 5 Massen % mindestens eines Additives,
H) 25 bis 45 Massen % organischer Lösemittel mit einem Siedepunkt über 160 °C.

### Beschreibung der Erfindung

Die in den erfindungsgemäßen Organosol-Polyesterlacken enthaltenen Polyesterharze (A) sind Stand der Technik (vgl Ullmann Encyclopedia of Industrial Chemistry Vol A 18 "Paint and Coatings", Section 2.7 "Saturated Polyester Coatings"). Diese werden hergestellt aus Polycarbonsäuren und Polyalkoholen. Geeignete Polycarbonsäuren aromatischer Art sind Terephthalsäure, Isophthalsäure, Phthalsäure, Trimellitsäure. Weitere geeignete Polycarbonsäuren sind cycloaliphatische Dicarbonsäuren wie Hexahydroterephthalsäure, Hexahydrophthalsäure sowie lineare aliphatische Dicarbonsäuren wie Bernstein-,Glutar-, Adipin-, Azelain-, Sebazin-,Decandicarbon-Säure oder dimere Fettsäuren. Geeignete Polyalkohole sind Glykole wie Ethylenglykol, Diethylenglykol, Propandiol-1,2, Butandiol-1,3, Butandiol-1,4, Pentandiol-1,5, Hexandiol-1,6, 2,2-Dimethylpropandiol-1,3 (Neopentylglykol), 1,4-Cyclohexandimethanol sowie trifunktionelle Alkohole wie Trimethylolpropan, Glycerin Die verwendeten Polyesterharze haben Molmassen (Zahlenmittel) im Bereich 1000 - 25000, vorzugsweise 2000 - 7000(g/mol). Die Struktur der verwendeten Polyesterharze kann linear oder verzweigt sein, vorzugsweise linear oder schwach verzweigt. Die verwendeten Polyesterharze haben entsprechende Hydroxylzahlen im Bereich 5 - 150, vorzugsweise im Bereich 20 - 80 (mg KOH /g). Die verwendeten Polyesterharze sind vorzugsweise hydroxylgruppenhaltig, können zugleich aber auch Säurezahlen im Bereich 0 - 30 (mg KOH/g) aufweisen. Entsprechend der Zusammensetzung sind die verwendeten Polyesterharze durch Glasumwandlungstemperaturen im Bereich - 50 bis + 70°C gekennzeichnet, vorzugsweise im Bereich 0 bis + 40°C. Die in den erfindungsgemäßen Organosol-Polyesterlacken enthaltenen Polyesterharze (A) sind in nachfolgend beschriebenen Lacklösemitteln lagerstabil löslich. Entsprechend ihrer Zusammensetzung sind die verwendeten Polyesterharze nichtkristallin (amorph) und gut verträglich mit anderen Lackrohstoffen.

Die in den erfindungsgemäßen Organosol-Polyesterlacken enthaltenen Vernetzerharze sind blockierte Polyisocyanatharze (B) und/oder Triazinharze (C), wobei sich blockierte Polyisocyanatharze besonders gut zur Herstellung von Dickschicht-Polyester-Polyurethan-Beschichtungen eignen.

Geeignete blockierte Polyisocyanatharze bestehen vorzugsweise aus Triisocyanuratharzen auf Basis cycloaliphatischer oder aliphatischer Diisocyanate,wie z. B. 3-Isocyanatomethyl-3.5.5-trimethylcyclohexylisocyanat (Isophorondiisocyanat, IPDI)oder Hexamethylendiisocyanat (HDI),blockiert mit Oximen (z.B. Acetonoxim,Butanonoxim), Aminen (z B. Diisopropylamin) oder Amiden (z. B. ε-Caprolactam).

Geeignete Triazinharze sind Reaktionsprodukte aus Melamin oder Benzoguanamin mit Formaldehyd, veräthert mit aliphatischen Alkoholen (z.B. Methanol, n-Butanol). Besonders geeignet zur Formulierung der erfindungsgemäßen Organosol-Polyesterlacke sind oligomere Triazinharze mit relativ geringem Vorkondensationsgrad. Im Fall der Vernetzung der Polyesterharze (A) mit Triazinharzen (C) beträgt das Massenverhältnis 95.5 bis 70:30, vorzugsweise 90:10 bis 80:20. Die Vernetzung der Polyesterharze (A) mit blockierten Polyisocyanatharzen (B) zu Polyester-Polyurethan-Beschichtungen geht in der Regel stöchiometrisch von einem Molverhältnis der Polyester-Hydroxylgruppen zu (blockierten) Isocyanatgruppen von 1:1 aus und bewegt sich vorzugsweise im Bereich 1:0,8 bis 1:1,25.

Erfindungsgemäß mit Feinpulvern kristalliner Copolyester (D) formulierte Polyester-Polyurethan-Dickschicht-Systeme zeigen die beste Verformbarkeit auf metallischen Substraten in der Weise, daß nach starker Umformung vorbeschichteter Bänder ein Minimum an Rissbildung in der Dickschichtlackierung feststellbar ist.

Die erfindungsgemäßen Organosol-Polyesterlacke können übliche Lack-Katalysatoren (F) enthalten, für Systeme aus Polyesterharzen und Triazinharzen auf Basis von Sulfonsäuren (z.B. Dodecylbenzolsulfonsäure, p-Toluolsulfonsäure, Dinonylnaphthalindisulfonsäure), vorzugsweise in blockierter Form (als Salze mit aliphatischen Aminen oder Addukten mit Epoxidverbindungen), bzw. für Polyester-Polyurethan-Systeme auf Basis von zinnorganischen Verbindungen (z. B. Dibutylzinndilaurat).

Zur Formulierung der erfindungsgemäßen Organosol-Polyesterlacke werden zweckmäßig Additive(G) verwendet, insbesondere mit entlüftungs- und entschäumungsfördernder Wirkung bzw. zur Verbesserung der Benetzung von Pigmentoberflächen oder der metallischen Substratoberflächen.

Die in den erfindungsgemäßen Organosol-Polyesterlacken enthaltenen Feinpulver bestehen aus kristallinen Copolyestern (D). Diese Copolyester sind Stand der Technik (vgl. DE 23 46 559, "Beschichtungspulver auf Basis von thermoplastischen Polyestern", Dynamit Nobel AG). Erfindungsgemäß verwendbare kristalline Copolyester werden hergestellt aus Dicarbonsäuren und Dialkoholen. Geeignete Polycarbonsäuren sind vorzugsweise aromatischer Art, insbesondere Terephthal-und Isophthalsäure, sowie lineare aliphatische Dicarbonsäuren wie Bernstein-, Adipin-, Sebazin-, Decandicarbon-Säure. Geeignete Polyalkohole sind Glykole wie Ethylenykol, Butandiol -1,4, Hexandiol -1,6. Die verwendeten Copolyester haben Molmassen (Zahlenmittel) im Bereich 10000-50000, vorzugsweise im Bereich 15000-30000 (g/mol). Die verwendeten Copolyester haben Hydroxylzahlen (endständige Hydroxylgruppen) im Bereich 1-10 (mg KOH/g). Entsprechend der Zusammensetzung sind die verwendeten Copolyester durch Glasumwandlungstemperaturen im Bereich -60° bis + 70°C gekennzeichnet, vorzugsweise im Bereich -50° bis + 40 °C. Entsprechend der Zusammensetzung der erfindungsgemäß verwendbaren kristallinen Copolyester, abhängig von der Mischung der verwendeten Dicarbonsäuren bzw. Dialkohole, sind diese gekennzeichnet durch Schmelztemperaturen im Bereich 80° bis 250°C, vorzugsweise im Bereich 100 - 200°C. Entsprechend ihrer Zusammensetzung sind die erfindungsgemäß verwendbaren Copolyester kristallin. Sie sind in nachfolgend beschriebenen Lacklösemitteln unlöslich und bei Raumtemperatur-Lagerung in denselben nur wenig quellbar. Die Massenzunahme durch Quellung darf bei Temperaturen bis zu 50 °C nach 24 Stunden ( Rühren einer Copolyester-Granulat-Probe in SOLVESSO 200S) den Wert von 10 Massen-%, bevorzugt 5 Massen-%, nicht überschreiten. Aufgrund ihrer geringen Quellbarkeit eignen sich kristalline Copolyester mit höherer Molmasse ( über 10000 g/mol, Zahlenmittel) besser zur Herstellung der erfindungsgemäßen Organosol-Polyesterlacke als niedermolekulare kristalline Polyesterharze.

Hochmolekulare Copolyester sind als filmbildende Bestandteile der erfindungsgemäßen Organosol-Polyesterlacke auch dadurch gekennzeichnet, daß sie wesentlich bessere lacktechnische Eigenschaften zeigen, im besonderen die Elastizität/ Härte - Relation der Beschichtungen betreffend. Niedermolekulare kristalline Polyesterharze zeigen in Beschichtungen schlechtere Flexibilität, sind anderseits dementsprechend leichter zu Feinpulver vermahlbar.

Zur erfindungsgemäßen Verwendung werden die kristallinen Copolyester zu Feinpulver vermahlen. Die Vermahlung kann mit üblichen Mahlaggregaten erfolgen, beispielsweise mit Prallteller-,Stift- oder Luftstrahlmühlen, wenn nötig unter Tiefkühlung des Mahlgutes. Das Feinpulver wird vorzugsweise mit einer Korngröße von max. 150 µm, vorzugsweise max. 100µm eingesetzt.

Die Feinpulver auf Basis der kristallinen Copolyester (D) sind in den lösemittelhaltigen Organosol-Polyesterlacken erfindungsgemäß in einer Menge von 10 bis 40 Massen-% suspendiert.

Die in den Lösemittelen gelösten Basis-Bindemittel, bestehend aus Polyesterharzen (A), blockierten Polyisocyanatharzen (B) oder Triazinharzen (C), vermischen sich bei der thermischen Verfilmung molekular mit den kristallinen Copolyestern (D) aus den in den erfindungsgemäßen Organosol-Polyesterlacken suspendierten Feinpulvern in der Weise, daß diese spätestens nach Überschreiten der Schmelztemperatur der kristallinen Copolyester sich in der Mischung der Basisbindemittel auflösen. Die kristallinen Copolyester reagieren mittels ihrer Hydroxyl-Endgruppen ebenso mit den Vernetzerharzen wie die in Lösung eingesetzten Polyesterharze (A). Es hängt von verschiedenen Faktoren, wie z. B, dem Kristallisationsgrad der Copolyester (D), deren Mengenverhältnis zum Basisbindemittel (bestehend aus (A), (B) und/oder (C ) bzw. von der Abkühlgeschwindigkeit des erfindungsgemäß beschichteten metallischen Substrats ab, in welchem Ausmaß sich beim Abkühlen und Erstarren der Beschichtung kristalline Strukturen in der Beschichtung einstellen, äußerlich an unpigmentierten Lackfilmen durch "Weiß-Anlaufen" erkennbar.

Es ist erfindungswesentlich, daß sich die vor der thermischen Verfilmung in Suspension isolierten Copolyester-Partikel bei der Hitzehärtung der erfindungsgemäßen Organosol-Polyesterharze zumindest in der äußeren Partikelschale molekular auflösen und daß sich beim Abkühlen und Erstarren der Dickschichtlackierungen keine neuen inneren Phasengrenzen mehr ausbilden, etwa zwischen sich aussondernden Copolyester-Partikeln und der umgebenden Basisbindemittel-Phase Eine wesentliche Voraussetzung hierfür ist die Verträglichkeit bzw. Mischbarkeit der hydroxylgruppenhaltigen Polyesterharze (A) und der kristallinen Copolyester (D), welche derselben Klasse der gesättigten Polyester (SP, saturated polyester) angehören.

Die erfindungsgemäßen Organosol-Polyesterlacke enthalten organische Lösemittel (H), Siedebereich über 160 °C, vorzugsweise über 220 °C, z. B. aromatische Kohlenwasserstoffe, Ester (z.B. Ethylethoxypropionat, Butylglykolacetat, Butyldiglykolacetat, Dibasic Ester Mixture (DBE), Glykoläther (z. B. Butylglykol, Butyldiglykol, Methyldipropylglykol) oder spezielle Alkohole ( z.B. Benzylalkohol, n-Butanol). Die Auswahl der Lösemittel richtet sich vor allem nach der Maßgabe, daß die Feinpulver der kristallinen Copolyester keine erhebliche Quellung erfahren dürfen, was sonst zum Eindicken der Organosol-Polyesterlacke führt. Zur Formulierung der erfindungsgemäßen Organosol-Polyesterlacke eignen sich vorzugsweise aromatische Kohlenwasserstoffe im Siedebereich ab 160 °C ( z. B. Solventnaphtha 100), ab 185 °C (z. B. Solventnaphtha 150) bzw. ab 220 °C ( z. B. SOLVESSO 200 S, Exxon).

Der Anteil der organischen Lösemittel beträgt in den erfindungsgemäßen Organosol-Polyesterlacken im Fall unpigmentierter Formulierungen 30 bis 45 Massen %, im Fall pigmentierter Formulierungen 25 bis 40 Massen %.

Die erfindungsgemäßen Organosol-Polyesterlacke können Pigmente und anorganische Füllstoffe (E) und andere übliche Zusatzstoffe enthalten. Als Pigmente sind erfindungsgemäß verwendbar z. B. Titandioxid oder anorganische Buntpigmente (Basis z.B. Eisen-, Chrom-, Nickel-Oxide). Es ist erfindungswesentlich, daß das Pigmentieren der in den Lösemitteln gelösten Basisbindemittel, bestehend aus Polyesterharzen (A) und Vernetzerharzen, durch Dispergieren der Pigmente mit den in der Lackindustrie üblichen Mahlaggregaten ( z.B. Perlmühlen) unproblematisch ist, so daß Wahl und Feineinstellung von Farbtönen bei den erfindungsgemäßen Dickschichtlackierungen keinerlei Einschränkungen unterliegt.

Die erfindungsgemäßen Organosol-Polyesterlacke können mit den bekannten großtechnischen Auftragsverfahren für Flüssiglacke auf Bänder lackiert werden, z. B. mit Walzlackiermaschinen. Mit üblichen Bandgeschwindigkeiten von Hochleistungsanlagen (Trockner-Verweilzeiten bis minimal 20 Sekunden) lassen sich in einem Arbeitsgang bzw. Trockner-Durchlauf Filmschichtstärken über 30 bis 100 µm auftragen. Dies stellt einen deutlichen Schritt über die bisher mit Bandbeschichtungen auf Polyester- bzw. Polyester-Polyurethan-Basis bekannte Grenze der maximal möglichen Filmschichtstärke bei ca. 30 µm dar. Die erfindungsgemäßen Organosol-Polyesterlacke lassen sich mit sehr guter Schichtstärkekonstanz verarbeiten. Farbtonwechsel auf der Beschichtungsanlage können problemlos erfolgen.

Die Aushärtung der Organosol-Polyesterlacke erfolgt im Verfahren der Bandbeschichtung mit Metall-Objekt-Temperaturen im Bereich von 190 - 250°C mit Trockner-Verweilzeiten im Bereich 20 - 70 Sekunden .

Beispiele für metallische Substrate, die erfindungsgemäß im Bandlackierverfahren beschichtet werden können, sind Bänder aus Stahl bzw. zink-oder aluminium/zinkmetallisiertem Stahl oder aus Aluminium. Die Metalloberflächen sind nach üblichen Verfahren vorbehandelt( z.B. Chromatierung, alkalische Oxidation, Phosphatierungen, anodische Oxidation) als wichtige Voraussetzung für einen möglichst widerstandsfähigen Verbund zwischen Metall und organischer Beschichtung.

Die erfindungsgemäßen Organosol-Polyesterlacke können ein- und mehrschichtig zum Einsatz kommen. Als Decklackierungen von Primer /Decklack-Systemen benötigen sie keine speziellen Primer wie z. B. PVC-Plastisol-Decklacke, deren Weichmacher-Bestandteile ungeeignete Primer durch Quellung zerstören können (Haftungsverlust auf metallischem Substrat). Die erfindungsgemäßen Organosol-Polyesterlacke können auch als Dickschicht-Primer mit Schichtstärken im Bereich 15 bis 30 µm zum Einsatz kommen, welche mit den auf dem Coil-Coating-Gebiet üblichen Decklacken auf Basis Polyester, Polyester-Polyurethan, aber auch auf Basis Polyvinylidenfluorid (PVDF) überlackiert werden können. Schließlich können die erfindungsgemäßen Organosol-Polyesterlacke auch einschichtig auf Aluminium-Bänder lackiert werden.

Die erfindungsgemäßen Dickschichtlackierungen weisen sehr gute mechanische Eigenschaften auf, hervorzuheben sind besonders die sehr gute Verformbarkeit und Abriebfestigkeit. Entsprechend den erfindungsgemäß erzielbaren Schichtstärken wird sehr guter Korrosionsschutz metallischer Substrate auch nach starker Umformung und anschließender Korrosionsbelastung im praktischen Einsatz erreicht. Die Witterungsbeständigkeit der erfindungsgemäßen Polyester-Dickschichtlackierungen ist gegenüber dem Stand der Technik auf Basis von PVC-Plastisolen deutlich verbessert. Aufgrund der vernetzten Struktur der erfindungsgemäßen Polyester-Organosollacke ist bei höheren Objekttemperaturen im Außeneinsatz unter Sonnenbestrahlung ein thermoplastisches Fließen unterbunden, welches den Einsatz von PVC-Plastisolbeschichteten Blechen z. B. unter tropischen Klimabedingungen ausschließt. Erfindungswesentlich ist schließlich, daß die Entsorgung (Recycling) von Blechen mit Dickschichtlackierungen auf Polyester-Basis unproblematisch ist.

Beispiele für industrielle Erzeugnisse, welche aus erfindungsgemäß vorbeschichteten metallischen Bändern hergestellt werden können, sind in der Bauindustrie Fassaden- und Dachverkleidungen für den Außeneinsatz sowie Anwendungen in der Innen-Architektur (z. B. Trennwände, abriebfest beschichtete Innenverkleidungen von Aufzugskabinen etc.), in der allgemeinen Industrie Beschichtungen mit gutem Korrosionsschutz (z. B. für Geräteverkleidungen), in der Autoindustrie z.B. für die Vorbeschichtung von Stahl-oder Aluminium-Blechen, welche nach Umformen weiter beschichtbar sind.

Die Erfindung wird nachfolgend anhand von Beispielen näher erläutert. Alle Angaben von Anteilen und Prozentsätzen beziehen sich auf die Massen der angegebenen Lackrohstoffe.

### Beispiele

In den beschriebenen Beispielen kommen in Lösemitteln lösliche, hydroxylgruppenhaltige Polyesterharze ( A) in folgenden Varianten zum Einsatz.
(A 1) ist ein mittelmolekulares, lineares, hydroxylgruppenhaltiges, gesättigtes Polyesterharz mit Hydroxylzahl 20 ( mg KOH/g), Säurezahl max. 3 (mg KOH/g), Molmasse 6000 (g/mol/, Zahlenmittel), Glasumwandlungstemperatur 10-15 °C, Löseform 50% in SOLVESSO 200 S (Exxon).
(A 2) ist ein niedermolekulares, lineares, hydroxylgruppenhaltiges, gesättigtes Polyesterharz mit Hydroxylzahl 50 (mg KOH/g), Säurezahl max. 5 (mg KOH/g), Molmasse 2000 (g/mol, Zahlenmittel), Glasumwandlungstemperatur 10 - 15 °C, Lieferform 70% in SOLVESSO 100 (Exxon)/ Butylglykol (80/20).

In Feinpulvern (D) kristalliner Copolyester kommen folgende Varianten zum Einsatz
(D 1) ist ein hochmolekularer, kristalliner Copolyester mit Molmasse 20000 (g/mol, Zahlenmittel), Glastemperatur 35 - 40 °C, Schmelztemperatur 190 - 195° C, Basis Terephthalsäure/ Butandiol -1,4.
(D 2) ist ein hochmolekulares, kristallines Polybutylenterephthalat, Molmasse 25000, Glastemperatur ca. 40 °C, Schmelztemperatur ca. 220 °C.
(D 3) ist ein mittelmolekularer, kristalliner Copolyester mit Molmasse 9000, Glastemperatur 35 - 40°C, Schmelztemperatur 190 - 195°C, Basis Terephthalsäure/Butandiol-1,4.
(D 4) ist ein hochmolekularer, kristalliner Copolyester mit Molmasse 30000, Glastemperatur 25 - 30°C, Schmelztemperatur 190 - 195°C, Basis Terephthalsäure/Monoethylenglykol.
(D 5) ist ein hochmolekularer, kristalliner Copolyester mit Molmasse 25000, Glastemperatur 20 - 25°C, Schmelztemperatur 100 - 105°C, Basis Terephthalsaure/Butandiol-1,4.
(D 6) ist ein hochmolekularer, kristalliner Copolyester mit Molmasse 20000, Glastemperatur - 25 bis - 30 °C, Schmelztemperatur 145 - 150° C, Basis Terephthalsäure/Butandiol -1 4.

Die handelsüblichen Copolyester (D 1),(D 2), (D 4),(D 5) und (D 6) werden als kristallin weißes Granulat auf tiefe Temperatur (Flüssig-Stickstoff) gekühlt und mit hierfür geeigneten Mahlaggregaten (z.B. auf einer Stiftmühle) zu Feinpulvern vermahlen, Korngröße max. 63 µm Für das Beispiel 4 wurde Feinpulver mit einer Korngröße max. 53 µm hergestellt.

### Beispiel 1:

25 0 Teile von Polyesterharz (A 1)/ 50% in SOLVESSO 200 S werden mit 3.0 Teilen SOLVESSO 200 S verdünnt und mit 15.0 Teilen Titandioxid-Pigment (KRONOS 2330) und mit 2.0 Teilen eines mineralischen Antiabsetzmittels (BENTONE 34/ 10% in Xylol/Propylencarbonat = 87/03) mit einem Dissolver vordispergiert. In einer Perlmühle wird die vordispergierte Pigmentpaste anschließend auf eine Mahlfeinheit (Pigment-Teilchengröße) von ca. 10-12 µm vermahlen. Danach wird mit 2.0 Teilen Polyesterharz (A 1) aufgelackt. Unter laufendem Dissolver werden anschießend 28.0 Teile Feinpulver von Copolyester ( D 1) eingetragen. Nach vollständiger Homogenisierung des Halbfabrikates werden 0.8 Teile eines entlüftungs- und entschäumungsfördernden Additivs zugesetzt sowie 4.0 Teile eines handelsüblichen, blockierten cycloaliphatischen Polyisocyanatharzes (VESTANAT B 1481/ 65 % Lff., NCO-Gehalt 8,5%, Hüls AG).

Mit 2.0 Teilen n-Butanol und 18.2 Teilen SOLVESSO 200 S (Exxon) wird der Organosol-Polyesterlack auf Verarbeitungsviskosität (40-50 Sekunden. Auslaufzeit, 6 mm-Becher, in Anlehnung an DIN 53 211) verdünnt. Die vollständige Rezeptur dieses und weiterer Beispiele findet sich in Tabelle I.

Für die Laborprüfung und lacktechnische Beurteilung wird der Organosol-Polyesterlack mit einer Spiralrakel auf Aluminium-Prüfbleche aufgezogen und in einem elektrisch beheizten Labor-Umluftofen ( Lufttemperatur z. B. 340 °C) thermisch verfilmt und gehärtet, wobei in diesem und weiteren Beispielen eine Metallobjekttemperatur von 250 - 260 °C eingehalten wurde (Ofenverweilzeit abhängig von der Blechdicke)

Die nach diesem und den weiteren Beispielen erhaltenen Dickschicht-Polyesterlacke wurden folgenden Prüfungen unterzogen.
a) Nichtflüchtige Anteile
   1 g Nasslack wird auf einem Blechdeckel ( ø 7cm) eingewogen und gleichmäßig auf der Deckelflache verteilt. Bei 180°C Umluftofen-Temperatur wird 60 Minuten getrocknet und anschließend rückgewogen.
b) Oberflächen-Struktur
   Die Oberfläche der Dickschicht-Lackierung wird visuell beurteilt: G= glänzend, S= seidenglänzend, M= matt, R= rauh
c) Maximal erzielbare Schichtstärke
   Durch Stichversuche mit Spiralrakeln verschiedener Größe bzw. resultierender Naßschichtdicke der aufgerakelten Nasslacke wird diejenige Trockenschichtdicke nach Schocktrocknung (Objekttemperatur 250 - 260 °C) ermittelt, bis zu der die Dickschichtlackierung keine Oberflächenstörungen zeigt (Kocher, Nadelstiche). Die Prüfung b) sowie die nachfolgend beschriebenen Prüfungen wurden einheitlich mit Trockenschichtdicken im Bereich 60 - 65 µm durchgeführt. Die erhaltenen Prüfresultate sind vom Typ und Vorbehandlung der Prüfbleche abhängig Die in Tabelle II zusammengestellten Prüfresultate wurden an Prüflacken auf Aluminiumblechen, Dicke 0,58 mm, vorbehandelt durch Chromatierung gefunden.
d) T-bend-Test
   Diese Elastizitätsprüfung wird nach ECCA*-Vorschrift "T 20" durchgeführt Eine beschichtete Blechprobe wird bei Raumtemperatur um 180°C vorgebogen und mittels einer Presse zunächst ohne Blech-Zwischenlage mit maximaler Außendehnung der Beschichtung zu einer "0 T"-Biegung verformt. Weitere 180 °C-Biegungen ergeben Biegeschultern mit Biegeradius "0,5 T" (T= thickness= Blechdicke), "1 T" etc. Ermittelt wird der kleinstmögliche Biegeradius, bei dem an der Biegeschulter noch keine Risse in der Beschichtung erkennbar sind.
e) T-bend-Kochtest
   Die Prüfung d) wird verschärft, indem die Blech-Biegeproben vor Beurteilung in kochendes Wasser getaucht werden ( 2 Minuten) Hierbei kommt es in der Regel zu stärkerer Rissbildung als bei Prüfung d).
f) T-bend-Kältetest
   Wie Prüfung d), jedoch erfolgt die Prüfung an kalten Blechproben, die vor Prüfung bei 0 - 5 °C gelagert wurden. Auch diese Prüfung ergibt in der Regel stärkere Rissbildung als Prüfung d).
g) Impact-Test
   Prüfung auf Schlagverformbarkeit nach ECCA* Vorschrift "T 5". Eine beschichtete Blechprobe wird mit einer Stahlkugel (ø 1.27cm,½") an der Spitze eines Fallhammers ( Masse 0,9 kg, Fallhöhe variabel) so schlagverformt, daß die Beschichtung nach außen umgeformt wird. An der verformten Stelle wird die Beschichtung auf Risse und Haftung geprüft (Bewertung : 1= keine Risse, 4= starke Rißbildung).
h) Einschichthaftung
   Diese Prüfung wird mit einem scharfschneidigen Messer durchgeführt. Mit möglichst großer Auflagekraft wird mit dem Messer versucht, die Beschichtung vom Blechuntergrund abzukratzen (Bewertung: 1= Abkratzen vom Blechuntergrund unmöglich, Messer hebt nur Späne aus dem Lackfilm, 4= Trennung Lackfilm vom Blech leicht möglich).
i) Abdruckfestigkeit
   Diese Prüfung wird in einer Presse durchgeführt, welche in einem Laborofen bei 50°C aufgestellt wird. Die in Tabelle II angegebenen Resultate wurden nach 16 Std. Anpressen von Prüflack gegen Blech unter einem Druck von 1 bar (1kp/cm²) gefunden (Bewertung: 1= keine Abdrücke, 4= starke Abdrücke bzw. Kleben der Beschichtung am Gegenblech).
   (* Prufmethode der European Coil Coating Association )

### Beispiele 2 bis 10:

Die übrigen Organosol-Polyesterlacke werden analog zu Beispiel 1 hergestellt, die Rezepturen finden sich in Tabelle I.

Der Organosol-Polyesterlack nach Beispiel 2 unterscheidet sich von 1 dadurch , daß als Vernetzerharz 1.5 Teile CYMEL 303 (Cytec) verwendet werden.

Das Beispiel 3 unterscheidet sich von 1 dadurch, daß der Organosol-Polyesterlack kein Vernetzungsmittel enthält.

Im Organosol-Polyesterlack nach Beispiel 4 wird Feinpulver von Copolyester (D 1) abweichend von den anderen Beispielen mit geringerer Korngröße ( max. 53 µm) eingesetzt.

Die Beispiele 5 bis 8 beschreiben Variationen von Copolyestern (D 2), (D 4), (D 5) und (D 6) als Feinpulver-Basis.

Das Beispiel 9 unterscheidet sich von 1 dadurch, daß abweichend auch von den anderen Beispielen als Basis des Feinpulvers ein Copolyester mit niedrigerer Molmasse zum Einsatz kommt.

Das Beispiel 10 unterscheidet sich von 1 dadurch, daß abweichend auch von den anderen Beispielen als lösliches Polyesterharz (A 2) ein niedermolekulares hydroxylgruppenreiches Polyesterharz zum Einsatz kommt.

Die Laborprüfung und lacktechnische Beurteilung der Beschichtungen nach den Beispielen 2 bis 10 erfolgte analog zum Beispiel 1. Die Prüfresultate sind in Tabelle II zusammengestellt

Der Vergleich der Beispiele 1 bis 3 zeigt, daß mit geeigneten Polyurethan-Vernetzerharzen (Beispiel 1) die besten mechanischen Prüfresultate mit einer Dickschicht-Polyester-Beschichtung erzielt werden können.

Das Beispiel 4 zeigt, daß übermäßige Kornfeinheit des Copolyesters-Feinpulvers für den Feststoffgehalt eines Organosol-Polyesterlackes sowie für die maximal erzielbare Filmschichtdicke eher nachteilig ist.

Das Beispiel 5 zeigt, daß zu hohe Schmelztemperatur des Feinpulver-Copolyesters für die Filmbildung und resultierenden Lackfilmeigenschaften nachteilig ist.

Das Beispiel 6 zeigt, daß kristalline Copolyester auf Basis von Monoethylenglykol aufgrund geringerer Kristallinitätsgrade und Quellungsbeständigkeit für die Formulierung der erfindungsgemäßen Organosol-Polyesterlacke weniger geeignet sind als Copolyester auf Basis Butandiol-1,4.

Das Beispiel 7 zeigt, daß auch Copolyester auf Basis von Butandiol-1,4 dann weniger gut zur Formulierung der erfindungsgemäßen Organosol-Polyesterlacke geeignet sind, wenn der Kristallinitätsgrad (in Korrelation mit der Schmelztemperatur) und damit verbunden die Quellungsbeständigkeit zu niedrig gewählt werden.

Das Beispiel 8 weist zwar erneut auf den ungünstigen Einfluß zu niedriger Schmelztemperatur und Quellungsbeständigkeit hin, zeigt aber andererseits, daß prinzipiell auch kristalline Copolyester mit sehr niedrigen Glastemperaturen zum erfindungsgemäßen Einsatz kommen können.

Das Beispiel 9 zeigt, daß auch kristalline Copolyester mit niedrigen Molmassen zum erfindungsgemäßen Einsatz kommen können.

Das Beispiel 10 zeigt, daß sich für die Kombination mit geeigneten kristallinen Copolyestern-Feinpulvern auch sehr niedermolekulare Polyesterharze als Basis-Bindemittel eignen können.

### Vergleichsbeispiele I bis III:

Die konventionellen Polyester-Einbrennlacke auf Basis der Polyesterharze (A1) bzw. (A 2) werden auf übliche Weise hergestellt, indem die Polyesterharzlösungen mit SOLVESSO 200 S verdünnt werden und in einer Perlmühle das Titandioxid-Pigment (KRONOS 2330) auf eine Mahlfeinheit von ca. 10-12µm vermahlen wird. Anschließend wird unter laufendem Dissolver Additiv, Vernetzerharz, Katalysator zugesetzt, abschließend wird der Lack mit Verdünner auf Verarbeitungsviskosität (z. B. 110 - 130 Sekunden Auslaufzeit, 4 mm-Becher, DIN 53211) eingestellt. Die vollständigen Rezepturen der Beispiele I bis III finden sich in Tabelle 1, die Prüfresultate der Laborprüfungen in Tabelle II.

Die Vergleichsbeispiele zeigen, daß konventionelle Polyester-Einbrennlacke Filmschichtdicken nur bis max. 30 µm in einem Arbeitsgang ermöglichen.

### Vergleichsbeispiel IV:

Zum System-Vergleich der erfindungsgemäßen Organosol-Polyesterlacke mit PVC-Plastisol-Beschichtungen nach dem Stand der Technik wurde ein PVC-Plastisol-Beschichtungsmittel hergestellt.

Hierzu wurden 14 0 Teile Titandioxid-Pigment (KRONOS 2330) in 20 Teilen Weichmacher (Dioctylphthalat) mit einem Dissolver dispergiert, unter laufendem Dissolver werden anschließend 56 Teile PVC-Feinpulver (z. B. VINNOL P 70 F, Wacker) eingetragen.

Nach vollständiger Homogenisierung werden je 1.7 Teile von zwei PVC-Hitzestabilisatoren (Basis epoxidiertes Sojaöl bzw. auf zinnorganischer Basis) zugesetzt. Mit 3.0 Teilen eines sehr hochsiedenden Lösemittels auf Esterbasis (Siedetemperatur 244 - 247 °C) sowie 3.6 Teilen von hochsiedendem Lackbenzin (Siedebereich 145 - 200 °C) wird das PVC-Plastisol auf Verarbeitungsviskosität (40 - 80 Sekunden Auslaufzeit, 6 mm-Becher in Anlehnung an DIN 53211) eingestellt. Die Laborprüfung und lacktechnische Beurteilung des PVC-Plastisol-Vergleichssystems erfolgte analog Beispiel 1, das Prüfresultat findet sich in Tab. II.

Das Vergleichsbeispiel zeigt den nach dem Stand der Technik mit halogenhaltigen Dickschichtlackierungen auf PVC-Plastisol-Basis erzielbaren Schichtdickenbereich bis 200 µm. Dickschichtlacke auf dieser Basis zeigen kein Haftvermögen auf metallischem Substrat, so daß Spezial-Primer für PVC-Plastisole eingesetzt werden müssen, welche gegen die für PVC-Plastisole typischen Weichmacher beständig sein müssen. Die Probleme beim Recycling PVC-beschichteter Bleche waren Ausgangspunkt der vorliegenden Erfindung.

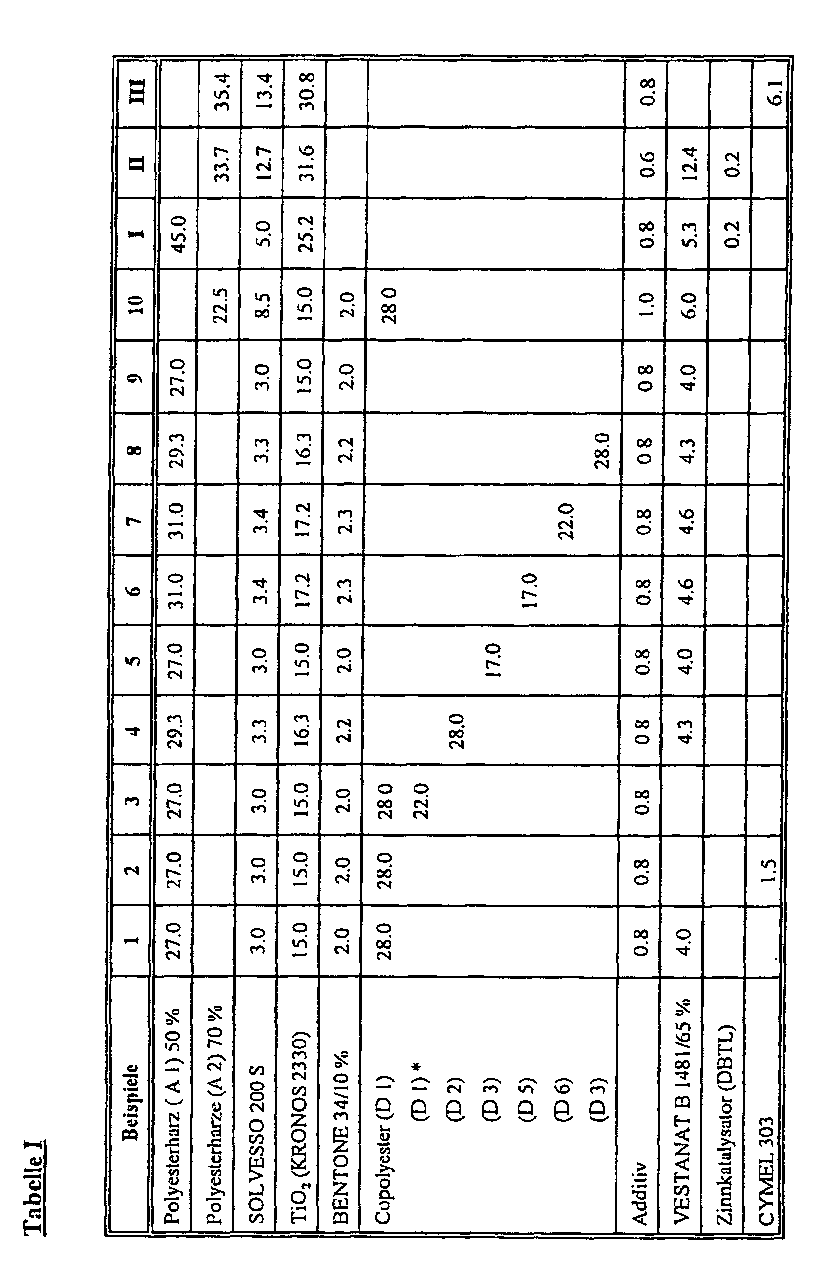

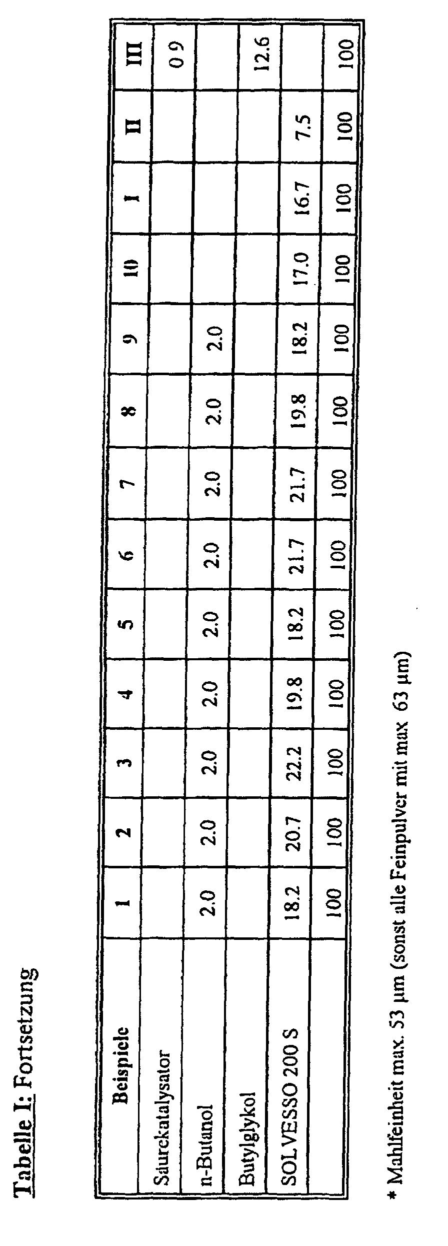

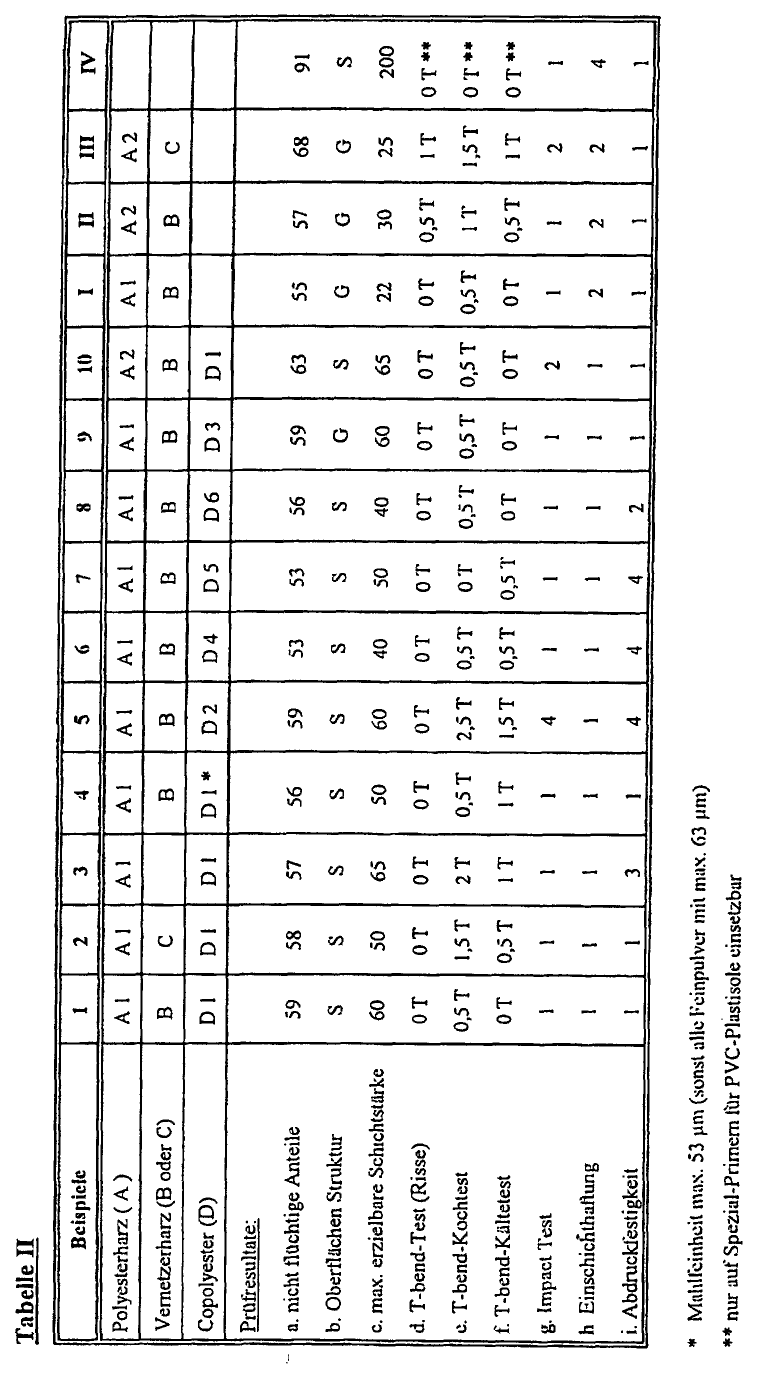

## Patentansprüche

1. Organosol-Polyesterlacke für Dickschichtlackierungen, im wesentlichen enthaltend
A) 10 bis 30 Massen % mindestens eines gelösten, linearen und/ oder schwach verzweigten amorphen Polyesters,
B) 0,5 bis 15 Massen % mindestens eines blockierten Polyisocyanatharzes und/oder
C) 0,5 bis 15 Massen % mindestens eines Triazinharzes,
D) 10 bis 40 Massen % Feinpulver von kleiner 150 µm Korngröße mindestens eines hochmolekularen kristallinen Copolyesters in Suspension, mit Molmasse von 10000 bis 50000 g/mol und geringer Quellbarkeit in Lösemitteln,
E) 0 bis 20 Massen % Pigmente und anorganische Füllstoffe,
F) 0 bis 1 Massen % mindestens eines Katalysators,
G) 0 bis 5 Massen % mindestens eines Additives,
H) 25 bis 45 Massen % organischer Lösemittel mit einem Siedepunkt über 160 °C.

2. Organosol-Polyesterlacke nach Anspruch 1,
**dadurch gekennzeichnet,**
**daß** die Quellbarkeit der Komponente (D) in einem organischen Lösemittel den Wert von 10 Massen % nicht überschreitet.

3. Organosol-Polyesterlacke nach den Ansprüchen 1 bis 2,
**dadurch gekennzeichnet,**
**daß** die Komponente (D) Molmassen von 15000 bis 30000 g/mol aufweist.

4. Organosol-Polyesterlacke nach den Ansprüchen 1 bis 3,
**dadurch gekennzeichnet,**
**daß** die Komponente (D) eine Korngröße von maximal 100 µm aufweist.

5. Organosol-Polyesterlacke nach den Ansprüchen 1 bis 4,
**dadurch gekennzeichnet,**
**daß** die Komponente (D) auf den Monomeren Terephthalsäure und Butandiol-1,4 basiert.

6. Organosol-Polyesterlacke nach den Ansprüchen 1 bis 5,
**dadurch gekennzeichnet,**
**daß** als Komponente (B) mit Oximen, Aminen und/oder Amiden blockiertes Polyisocyanat auf Basis IPDI und/ oder HDI enthalten ist.

7. Organosol-Polyesterlacke nach den Ansprüchen 1 bis 6,
**gekennzeichnet dadurch,**
**daß** als Komponente (C) Reaktionsprodukte aus Melamin und/oder Benzoguanamin mit Formaldehyd enthalten sind.

8. Organosol-Polyesterlacke nach den Ansprüchen 1 bis 7,
**gekennzeichnet dadurch,**
**daß** die Komponente (C ) mit aliphatischen Alkoholen veräthert vorliegt.

9. Organosol-Polyesterlacke nach den Ansprüchen 1 bis 8,
**gekennzeichnet dadurch,**
**daß** die Komponente (A) Molmassen im Bereich 1000 bis 25000, bevorzugt 2000 bis 7000, Hydroxylzahlen von 5 bis 150, vorzugsweise 20 - 80 mg KOH/g und Glasumwandlungstemperaturen von -50 bis 70 °C, vorzugsweise 0 bis 40 °C, aufweist.

10. Organosol-Polyesterlacke nach den Ansprüchen 1 bis 9,
**dadurch gekennzeichnet,**
**daß** als Lösemittel (Komponente H) aromatische Kohlenwasserstoffe, Ester, Glykolether oder Alkohole enthalten sind.

11. Verwendung der Organosol-Polyesterlacke gemäß der Zusammensetzung der Ansprüche 1 bis 10 als Beschichtungmittel.

12. Verfahren zur Herstellung von Dickschichtlackierungen, enthaltend Organosol-Polyesterlacke gemäß den Ansprüchen 1 bis 10,
**dadurch gekennzeichnet,**
**daß** die Organosol-Polyesterlacke als Dickschicht-Decklacke auf üblichen Primern, einschichtig als Dickschicht-Decklacke oder als Dickschicht-Primer eingesetzt werden.

13. Verfahren zur Herstellung von Dickschichtlackierungen, enthaltend Organosol-Polyesterlacke nach Anspruch 12,
**dadurch gekennzeichnet,**
**daß** die Schichtdicke der Organosol-Polyesterlacke, verwendet als Dickschicht-Decklacke, 30 - 100 µm beträgt.

14. Verfahren zur Herstellung von Dickschichtlackierungen, enthaltend Organosol-Polyesterlacke nach Anspruch 12,
**dadurch gekennzeichnet,**
**daß** die Schichtdicke der Organosol-Polyesterlacke, verwendet als Dickschicht-Primer, 15 - 30 µm beträgt.

## Claims

1. An organosol polyester coating material for thick-layer coatings, essentially comprising
A) from 10 to 30% by mass of at least one linear and/or slightly branched amorphous polyester in solution,
B) from 0.5 to 15% by mass of at least one blocked polyisocyanate resin and/or
C) from 0.5 to 15% by mass of at least one triazine resin,
D) from 10 to 40% by mass of fine powder of less than 150 µm in particle size of at least one high molecular mass crystalline copolyester in suspension, having a molar mass of from 10,000 to 50,000 g/mol and being of low swellability in solvents,
E) from 0 to 20% by mass of pigments and inorganic fillers,
F) from 0 to 1% by mass of at least one catalyst,
G) from 0 to 5% by mass of at least one additive, and
H) from 25 to 45% by mass of organic solvents having a boiling point of more than 160°C.

2. An organosol polyester coating material according to claim 1, **characterized in that** the swellability of component (D) in an organic solvent does not exceed 10% by mass.

3. An organosol polyester coating material according to either of claims 1 and 2, **characterized in that** component (D) has molar masses of from 15,000 to 30,000 g/mol.

4. An organosol polyester coating material according to any of claims 1 to 3, **characterized in that** component (D) has a particle size of not more than 100 µm.

5. An organosol polyester coating material according to any of claims 1 to 4, **characterized in that** component (D) is based on the monomers terephthalic acid and 1,4-butanediol.

6. An organosol polyester coating material according to any of claims 1 to 5, **characterized in that** polyisocyanate based on IPDI and/or HDI and blocked with oximes, amines and/or amides is present as component (B).

7. An organosol polyester coating material according to any of claims 1 to 6, **characterized in that** reaction products of melamine and/or benzoguanamine with formaldehyde are present as component (C).

8. An organosol polyester coating material according to any of claims 1 to 7, **characterized in that** component (C) is present in a form etherified with aliphatic alcohols.

9. An organosol polyester coating material according to any of claims 1 to 8, **characterized in that** component (A) has molar masses in the range from 1000 to 25,000, preferably from 2000 to 7000, hydroxyl numbers of from 5 to 150, preferably 20-80, mg of KOH/g and glass transition temperatures from -50 to 70°C, preferably 0 to 40°C.

10. An organosol polyester coating material according to any of claims 1 to 9, **characterized in that** aromatic hydrocarbons, esters, glycol ethers or alcohols are present as solvent (component H).

11. The use of an organosol polyester coating material with a composition according to any of claims 1 to 10 as a coating composition.

12. A process for preparing thick-layer coatings comprising organosol polyester coating materials according to any of claims 1 to 10, **characterized in that** the organosol polyester coating materials are employed as thick-layer topcoats on customary primers, in single-coat form as thick-layer topcoats or as thick-layer primers.

13. A process for preparing thick-layer coatings comprising organosol polyester coating materials, according to claim 12, **characterized in that** the film thickness of the organosol polyester coating materials used as thick-layer topcoats is 30-100 µm.

14. A process for preparing thick-layer coatings comprising organosol polyester coating materials, according to claim 12, **characterized in that** the film thickness of the organosol polyester coating materials used as thick-layer primers is 15-30 µm.

## Revendications

1. Laques de polyesters sous forme d'organosols pour laquages en couche épaisse contenant essentiellement
A) de 10 à 30 % en masse d'au moins un polyester dissout, linéaire et/ou faiblement ramifié, amorphe ;
B) de 0,5 à 15 % en masse d'au moins une résine de polyisocyanate bloqué ; et/ou
C) de 0,5 à 15 % en masse d'au moins une résine de triazine ;
D) de 10 à 40 % en masse de poudre fine de taille de grain inférieure à 150 µm d'au moins un copolyester à poids moléculaire élevé en suspension, ayant des masses molaires de 10 000 à 50 000 g/mol et une faible aptitude au gonflement dans les solvants,
E) de O à 20 % en masse de pigments et de substance de remplissage minérale ;
F) de 0 à 1 % en masse d'au moins un catalyseur ;
G) de 0 à 5 % en masse d'au moins un additif ;
H) de 25 à 45 % en masse d'un solvant organique ayant un point d'ébullition au dessus de 160°C.

2. Laque de polyester sous forme d'organosol, selon la revendication 1,
**caractérisé en ce que**
la capacité de gonflement du composant (D) dans un solvant organique ne dépasse pas la valeur de 10 % en masse.

3. Laque de polyester sous forme d'organosol, selon les revendications 1 à 2,
**caractérisé en ce que**
le composant (D) possède des masses molaires de 15 000 à 30 000 g/mol.

4. Laque de polyester sous forme d'organosol, selon les revendications 1 à 3,
**caractérisée en ce que**
le composant (D) possède une taille de graines d'au maximum 100 µm.

5. Laque de polyester sous forme d'organosol selon les revendications 1 à 4,
**caractérisée en ce que**
le composant (D) est basé sur les monomères d'acide téréphtalique et de butane diol-1,4.

6. Laque de polyester sous forme d'organosol selon les revendications 1 à 5,
**caractérisée en ce que**
comme composant (B) elle contient un polyisocyanate bloqué avec des oximes, des amines, et/ou des amides à base d'IPDI et/ou de HDI.

7. Laque de polyester sous forme d'organosol, selon les revendications 1 à 6,
**caractérisée en ce que**
comme composant (C) elle contient des produits de réaction à partir de mélamine et/ou de benzoguanamine avec du formaldéhyde.

8. Laque de polyester sous forme d'organosol, selon les revendications 1 à 7,
**caractérisée en ce que**
le composé (C) se présente sous forme étherifiée par des alcools aliphatiques.

9. Laque de polyester sous forme d'organosol selon les revendications 1 à 8,
**caractérisée en ce que**
le composant (A) possède des masses molaires dans la zone de 1 000 à 25 000, de préférence de 2 000 à 7 000, des indices d'hydroxyle de 5 à 150, de préférence de 20 à 80 mg de KOH/g, et des températures de conversion vitreuse de -50 à 70°C, de préférence de 0 à 40°C.

10. Laque de polyester sous forme d'organosol selon les revendications 1 à 9,
**caractérisée en ce que**
comme solvant (composant H) elle contient des hydrocarbures aromatiques, des esters, un éther de glycol ou des alcools.

11. Utilisation des laques de polyester sous forme d'organosol, conformément à la composition des revendications 1 à 10, en tant qu'agent de revêtement.

12. Procédé de production de laquages en couche épaisse contenant des laques de polyester sous forme d'organosol conformément aux revendications 1 à 10,
**caractérisé en ce que**
les laques de polyester sous forme d'organosol sont mises en oeuvre comme laque de couverture en couche épaisse sur des enduits habituels d'une manière monocouche comme laques de couverture en couche épaisse ou comme enduit en couche épaisse.

13. Procédé de production de laquages en couche épaisse contenant des laques de polyester sous forme d'organosol selon la revendication 12,
**caractérisé en ce que**
l'épaisseur de couche de laque de polyester sous forme d'organosol, utilisée comme laque de couverture en couche épaisse, est de 30 à 100 µm.

14. Procédé de production de laquages en couche épaisse contenant une laque de polyester sous forme d'organosol selon la revendication 12,
**caractérisé en ce que**
l'épaisseur de couche de la laque de polyester sous forme d'organosol, utilisée comme enduit en couche épaisse, est de 15-30 µm.
